Europäisches Patentamt

European Patent Office

Office européen des brevets

(11) Publication number: **0 231 587 B1**

## EUROPEAN PATENT SPECIFICATION

(45) Date of publication of patent specification: **22.04.92**  (51) Int. Cl.5: **B01D 29/62**, B01D 29/50

(21) Application number: **86307832.5**

(22) Date of filing: **09.10.86**

(54) **A method of batch filtration and control means for a filter.**

(30) Priority: **31.01.86 ZA 860724**

(43) Date of publication of application:
**12.08.87 Bulletin 87/33**

(45) Publication of the grant of the patent:
**22.04.92 Bulletin 92/17**

(84) Designated Contracting States:
**AT BE CH DE FR GB IT LI NL SE**

(56) References cited:
**DE-A- 3 428 428**
**FR-A- 1 437 727**
**FR-A- 2 299 066**
**GB-A- 961 320**
**US-A- 2 423 172**

(73) Proprietor: **Schewitz, Jonathan**
**82 Devereux Avenue Vincent**
**East London, Cape Province(ZA)**

(72) Inventor: **Schewitz, Alexander**
**37 Paterson Street**
**East London, Cape Province(ZA)**

(74) Representative: **Price, Paul Anthony King et al**
**D. Young & Co. 10 Staple Inn**
**London WC1V 7RD(GB)**

Rank Xerox (UK) Business Services

## Description

This invention relates to a method of batch filtration and control means for a filter to effect the method of filtration.

It is known in the art to overcome the problems of slow filtration rate, rapid medium binding and low filtration efficiency by means of filtration aids. Filtration aids generally comprise granular or fibrous materials, for example diatomaceous earth, which are capable of forming highly permeable filter cakes upon which filtration takes place. Such filtration aids are generally only used in batch filtration processes wherein filtered matter progressively builds up in cake form until an unacceptably high pressure drop develops across the cake. The filtration process must then be interrupted in order to remove the cake either by backwashing or opening of the filter followed by physical removal of the cake. The filtration aid, almost invariably, cannot be separated from the filtered matter and is lost resulting in high operating expenditure.

Similar but less relevant prior art filtration methods are disclosed in US-A-2,423,172 and GB-A-961,320.

It will be understood by those skilled in the art that the terms cake or filter cake imply a packed layer of filtered matter which is produced, adjacent the filter medium of a filter, by the progressive deposition of the filtered matter thereon. It will further be understood by those skilled in the art that the term filtration cycle implies the filtration process from one shutdown to the next and may include the steps of pre-coating, filtering and backwashing or cleaning.

According to a first aspect of the present invention, there is provided a method of batch filtration comprising a filtration cycle having the steps of: (i) introducing a filtration aid into a filter and causing unfiltered fluid to flow through the filter to provide a pre-coat of the filtration aid on a filter medium in the filter; (ii) passing unfiltered fluid into the filter through one or more inlets and then through the pre-coat and filter medium to deposit a filter cake on the pre-coat and thereby produce filtered fluid, which leaves the filter through an outlet; and (iii) opening a drain from the filter; passing fluid into the filter and through the filter medium in the reverse direction to the fluid flow during step (i), to lift the filter cake and pre-coat off the filter medium; using fluid to flush the filter cake and pre-coat out of the filter through the drain; and closing the drain, thereby to end the cycle and prepare the filter for repeat cycles; characterised in that on at least one occasion the filtration cycle includes the steps of: (a) interrupting step (ii); (b) closing the inlet(s) and passing fluid through the outlet and through the filter medium in the reverse direction to the fluid flow during step (i), to lift and break up the filter cake and pre-coat; (c) passing fluid through the filter medium in the direction of the fluid flow during step (i) to provide, on the filter medium, a pre-coat comprising the bulk of the broken-up filter cake and pre-coat of step (b); and (d) resuming step (ii).

By using steps (a) to (d) to form a new pre-coat from the bulk of the broken-up filter cake and old pre-coat, the duration of the filtration cycle is increased. Thus, a given amount of filtration aid lasts for a longer period of filtration.

Preferably, step (b) has a duration of less than or equal to 10 seconds. Preferably, step (b) includes opening and closing of the drain, the duration of opening of the drain being less than the duration of step (b) (e.g. for less than or equal to 2 seconds).

Preferably, the filtration cycle includes a plurality of sequences of the steps (a) to (d).

According to a second aspect of the present invention, there is provided a control means for a filter, comprising: a timing means having an output to a controller, the controller having an output to a filter pump; an electrically driven filter inlet valve; an electrically driven filter outlet valve; and an electrically driven filter drain valve; wherein the timing means is arranged to activate the controller to cause the controller to carry out a filtration cycle involving the steps of: (i) opening the inlet and outlet valves, whilst the drain valve is kept closed, to permit forward flow of fluid through a filter medium in the filter; and (ii) opening the drain valve to permit reverse flow of fluid through the filter medium; characterized in that on at least one occasion the filtration cycle includes the steps of: (a) interrupting step (i); (b) closing the inlet valve for a first predetermined period of time; and opening the drain valve for a second predetermined period of time within and shorter than the first predetermined period of time, to permit reverse flow of fluid through the filter medium; and (c) resuming step (i).

Preferably, step (b) has a duration of less than or equal to 10 seconds.

Preferably, the second predetermined period is less than or equal to 2 seconds.

Preferably, the filtration cycle includes a plurality of sequences of the steps (a) to (c).

Preferably, the control means further comprises an electrically driven connecting valve for a pipe connecting the forward flow upstream side of the inlet valve to a point intermediate the forward flow downstream side of a filter outlet and the outlet valve; wherein during step (i) the connecting valve is kept closed and during step (b) the outlet valve is closed and the connecting valve is opened.

Preferably, the timing means comprises two timers, a first timer arranged to time the filtration cycle and a second timer, activated by the first timer, arranged to time steps (a) to (c). Preferably, each timer comprises a standard timer switch arranged to activate the controller by either mechanical or electrical means.

Preferably, the controller is an analogue or digital controller. Preferably, the controller is arranged to activate the filter pump and valves with electrical signals.

Preferably, the controller includes a manual override which has means to manually effect any one of step (i), step (ii) and steps (a) to (c).

A non-limiting embodiment of the invention will now be described, by way of example, with reference to the accompanying drawings, in which:-

Figure 1 illustrates a pressure filter in a filtration stage,

Figure 2 illustrates a pressure filter in a backwash stage, and

Figure 3 illustrates a process control chart embodying the invention.

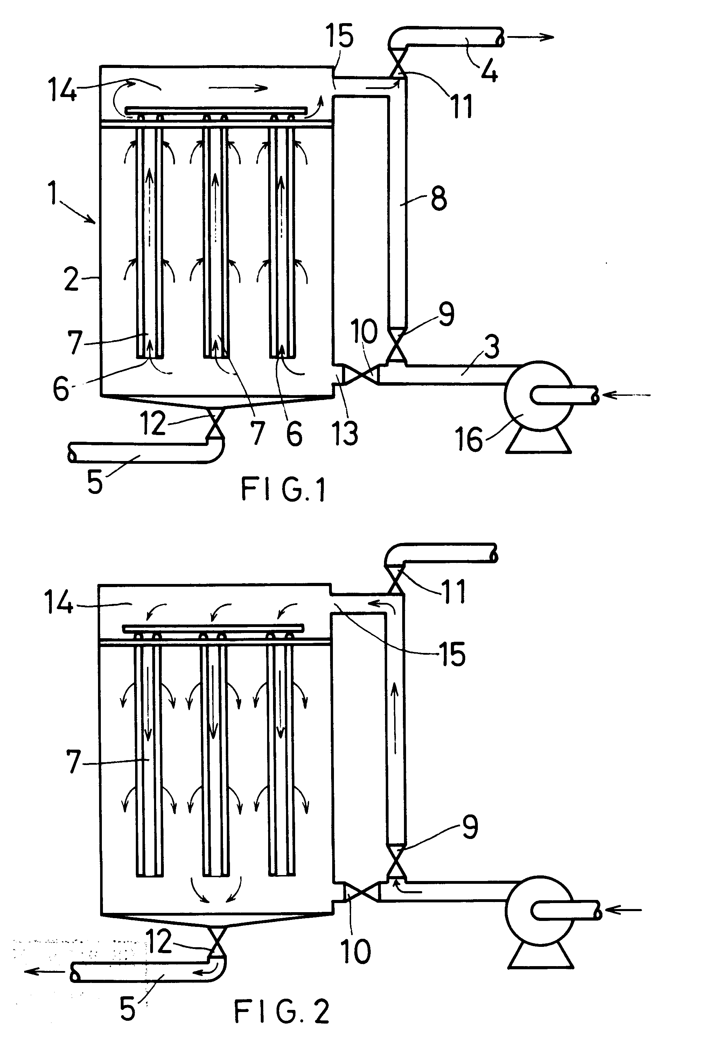

Referring now to Figure 1, there is illustrated a pressure filter (1) of a type known in the art. The filter comprises a pressure vessel (2) having an inlet pipe (3), an outlet pipe (4) and a drain pipe (5). The filter medium comprises vertical leaves (6) each having a hollow core (7). The inlet pipe 3 and outlet pipe 4 are interconnected by a pipe (8) having a valve (9) located therein. The inlet, outlet and drain pipes each have located therein a valve indicated by the numerals (10), (11), and (12) respectively.

In use, the inlet valve (10) and the outlet valve (11) are in an open position while the drain valve (12) and the connecting valve (9) are in a closed position. A slurry of a fluid and a filtration aid is initially pumped into the filter in order to provide a pre-coat on the filter medium. This is followed by the fluid which is to be filtered. It will be appreciated that the fluid enters the pressure vessel via the inlet (13), which in this type of filter is generally located adjacent the vessel bottom. The pressurised fluid then passes through the pre-coat and filter medium into the leaf cores (7), leaving the filtered matter in cake form on the exterior of the filter medium. The fluid then passes up the cores (7) and is channeled via a manifold (14) to an outlet (15). This filtration stage continues until the build up of filtered matter on the filter medium is such that the pump (16) can no longer supply a sufficient flow of fluid or, alternatively, for a pre-set time period. It will be understood by those skilled in the art that the pump (16) will generally be a centrifugal type pump.

Referring now to Figure 2, the caked filtered matter may be removed from the filter medium by closing the inlet valve (10) and the outlet valve (11) while opening the connecting valve (9) and the drain valve (12). The pumped fluid then flows into the filter through the outlet (15), into the manifold (14), and into the leaf cores (7) and through the filter medium. The fluid passing through the filter medium moves the cake from the filter medium external surface and transports it from the pressure vessel via drain pipe (5). It will be readily appreciated that the filtration aid is lost from the pressure vessel along with the filtered matter. This technique is termed backwashing in the art. In practice, it proves difficult to remove the filtration aid from the filtered matter and, further, the filtration period between successive backwashes can be short.

Such a filtration cycle is modified by the present invention as follows:

Once the flow rate of fluid to be filtered reaches an unacceptably low level or, alternatively, at pre-set periodic intervals, the inlet valve (10) and the outlet valve (11) are closed while the connecting valve (9) is opened. The drain valve (12) is then opened for a short period of time, generally in the region of 2 seconds. The drain valve (12) is then closed and after a period of time, generally in the region of 10 seconds, the inlet valve (10) and the outlet valve (11) are opened once more while the connecting valve (9) is closed. The filter thus returns to the normal filtration stage. This regeneration procedure or pulsed flow stage loosens the filter cake from the filter medium without extensive loss of filtration aid. It will be appreciated that the majority of the filter cake will remain within the pressure vessel although it will be suspended in the fluid contained therein. The suspended matter will clearly form another cake once the filtration process is resumed. The pump may be switched off prior to each valve setting change and then re-activated.

Conveniently, there is provided a controller to effect automatic regeneration of the filter in this matter. Essentially the controller will include an input from a timing means and will provide electrical output signals, to each one of the pump (16), the inlet valve (10), the outlet valve (11), the drain valve (12) and the connecting valve (9). The valves conveniently comprise butterfly valves which are driven by electrical motors or a solenoid. The actuation signal received from the controller will cause the particular motor or solenoid to either open or close the driven valve. The input received from the timing means may be in the form of a mechanical or an electrical pulse. The controller may comprise any suitable programable controller of the types known in the art and may be analogue, for example a standard swimming pool controller, or digital. The controller may be programmed such that the output, on receipt a particular input, effects the necessary actuation of the valves and pump.

The timing means may comprise any suitable analogue or digital timer which may be syncronised to real time and its operation independent of the rest of the system. Further, two timers may be provided, one to indicate whether the filter should be in filter, regeneration, backwash or shutdown mode and the other, which is activated by the first, to time the controller within the regenerative mode. The level of sophistication of the controller and timing means may be selected to provide for particular applications, and may comprise standard swimming pool timers.

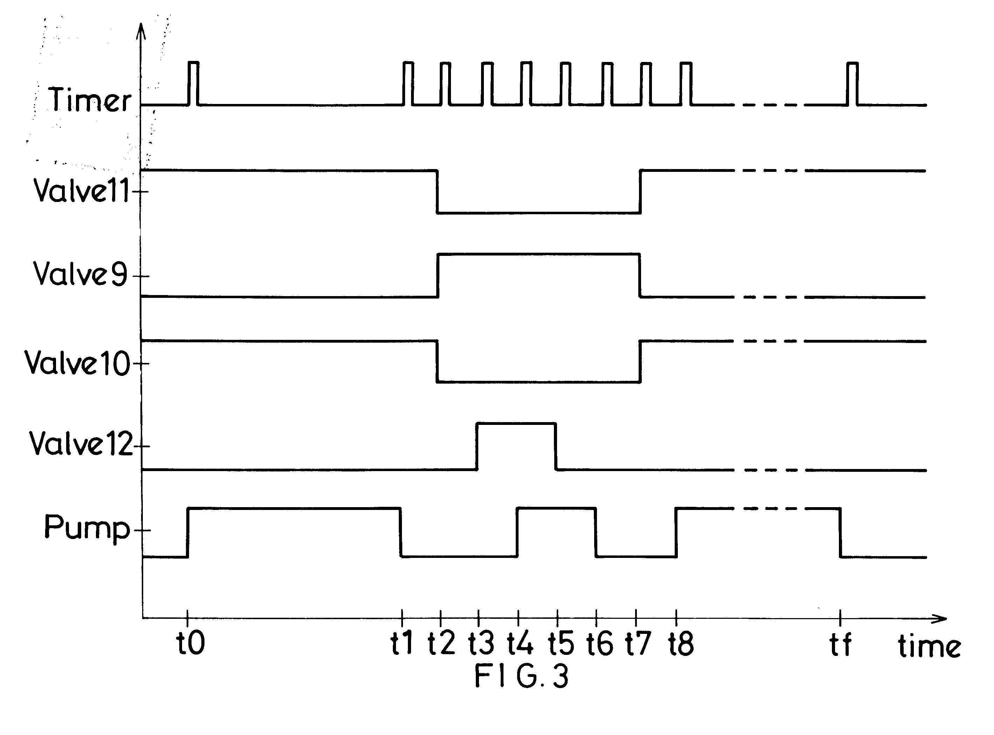

Referring now to Figure 3, there is provided a typical control diagram for a filtration cycle. The x-axis schematically indicates time while the y-axis indicates the state of the timer, valves and pump. It will be appreciated that, when a valve has a reading above the individual mean, then it is open, while a reading below the mean indicates the valve is closed. Similarly a reading above the individual mean for the pump (16) indicates the pump is operational. The timer activity is indicated by pulses.

At time before $t_0$, the inlet valve (10) and the outlet valve (11) are open while the drain valve (12) and the connecting valve (9) are closed. The pump (16) is not operational. The filter is in shutdown mode. At a time $t_0$, the timer pulses the controller which activates the pump (16). The filter is in filtration mode and fluid entering the filter is filtered. At a pre-set time $t_1$, the timer pulses the controller to initiate the pulsed regenerative mode by de-activating the pump (16). This step is not necessary but is preferred. Almost immediately thereafter, at time $t_2$, the timer pulses the controller to close the inlet and outlet valves (10) and (11) and to open the connecting valve (9).

Almost immediately thereafter at time $t_3$, the timer pulses the controller to open the drain valve (12). At time $t_4$, the timer pulses the controller to activate the pump. At time $t_5$, approximately 2 seconds after time $t_4$, the controller is pulsed by the timer to effect closing of the drain valve (12). Approximately 10 seconds thereafter, at time $t_6$, the pump is de-activated. Immediately after, at time $t_7$, the inlet and outlet valves (10) and (11) are opened while the connecting valve (9) is closed. Immediately thereafter, at time $t_8$, the pump is again activated. The regeneration mode is complete at this time. The filter may then enter successive filtration and regeneration modes until time $t_f$, when the filter is shut down or backwashed in the usual way.

The controller may be provided with a manual override. The manual override may include manual on/off switches for the valves and the pump. The manual override will enable the operator thereof to operate the filter in any particular mode, including a backwash mode.

For convenience, a pilot light may be associated with each output signal from the controller viz, to the pump and each of the valves (9), (10), (11) and (12). The pilot light will indicate whether the pump, or any one of the valves has been activated.

It will be appreciated that the invention provides a method of filtration which reduces backwash or downtime and loss of filtration aid as well as a convenient means for effecting control of the filtration method. It will also substantially lengthen the serviceability of each batch of filtration aid by the simple expedient of causing the filter aid and filter material to rearrange itself on the filter medium during each pulsed regeneration phase.

**Claims**

1. A method of batch filtration comprising a filtration cycle having the steps of:-

    (i) introducing a filtration aid into a filter (1) and causing unfiltered fluid to flow through the filter (1) to provide a pre-coat of the filtration aid on a filter medium (6) in the filter;

    (ii) passing unfiltered fluid into the filter (1) through one or more inlets (13) and then through the pre-coat and filter medium (6) to deposit a filter cake on the pre-coat and thereby produce filtered fluid, which leaves the filter (1) through an outlet (15); and

    (iii) opening a drain (5) from the filter (1); passing fluid into the filter (1) and through the filter medium (6) in the reverse direction to the fluid flow during step (i), to lift the filter cake and pre-coat off the filter medium; using fluid to flush the filter cake and pre-coat out of the filter (1) through the drain (5); and closing the drain (5), thereby to end the cycle and prepare the filter for repeat filtration cycles;

    characterised in that on at least one occasion the filtration cycle includes the steps of:-

    (a) interrupting step (ii);

    (b) closing the inlet(s) (13) and passing fluid through the outlet (15) and through the filter medium (6) in the reverse direction to the fluid flow during step (i), to lift and break up the filter cake and pre-coat;

    (c) passing fluid through the filter medium (6) in the direction of the fluid flow during step (i) to provide, on the filter medium (6), a pre-coat comprising the bulk of the broken-up filter cake and pre-coat of step (b); and

    (d) resuming step (ii).

2. A method according to claim 1, wherein step (b) has a duration of less than or equal to 10 seconds.

3. A method according to claim 1 or 2, wherein step (b) includes opening and closing of the drain (5), the duration of opening of the drain (5) being less than the duration of step (b).

4. A method according to claim 3 when dependent on claim 2, wherein the duration of opening of the drain (5) during step (b) is less than or equal to 2 seconds.

5. A method according to any one of claims 1 to 4, wherein the filtration cycle includes a plurality of sequences of the steps (a) to (d).

6. A control means for a filter, comprising:-

a timing means having an output to a controller, the controller having an output to a filter pump (16); an electrically driven filter inlet valve (10); an electrically driven filter outlet valve (11); and an electrically driven filter drain valve (12); wherein the timing means is arranged to activate the controller to cause the controller to carry out a filtration cycle involving the steps of:-

(i) opening the inlet and outlet valves (10, 11), whilst the drain valve (12) is kept closed, to permit forward flow of fluid through a filter medium (6) in the filter (1); and

(ii) opening the drain valve (12) to permit reverse flow of fluid through the filter medium (6);

characterized in that on at least one occasion the filtration cycle includes the steps of:-

(a) interrupting step (i);

(b) closing the inlet valve (10) for a first predetermined period of time; and opening the drain valve (12) for a second predetermined period of time within and shorter than the first predetermined period of time, to permit reverse flow of fluid through the filter medium (6); and

(c) resuming step (i).

7. A control means according to claim 6, wherein step (b) has a duration of less than or equal to 10 seconds.

8. A control means according to claim 6 or 7, wherein the second predetermined period is less than or equal to 2 seconds.

9. A control means according to any one of claims 6 to 8, wherein the filtration cycle includes a plurality of sequences of the steps (a) to (c).

10. A control means according to any one of claims 6 to 9, further comprising an electrically driven connecting valve (9) for a pipe connecting the forward flow upstream side of the inlet valve (10) to a point intermediate the forward flow downstream side of a filter outlet (15) and the outlet valve (11); wherein during step (i) the connecting valve (9) is kept closed and during step (b) the outlet valve (11) is closed and the connecting valve (9) is opened.

11. A control means according to any one of claims 6 to 10, wherein the timing means comprises two timers, a first timer arranged to time the filtration cycle and a second timer, activated by the first timer, arranged to time steps (a) to (c).

12. A control means according to claim 11, wherein each timer comprises a standard timer switch arranged to activate the controller by either mechanical or electrical means.

13. A control means according to any one of claims 6 to 12, wherein the controller is an analogue or digital controller.

14. A control means according to claim 13, wherein the controller is arranged to activate the filter pump (16) and valves (9 to 12) with electrical signals.

15. A control means according to any one of claims 6 to 14, wherein the controller includes a manual override which has means to manually effect any one of step (i), step (ii) and steps (a) to (c).

**Revendications**

1. Procédé de filtration par lots comprenant un cycle de filtration comportant les étapes consistant à:

(i) introduire un agent de filtration dans un filtre (1) et amener du fluide non filtré à circuler dans le filtre (1) pour produire une préenduction de l'agent de filtration sur un milieu filtrant (6) à l'intérieur du filtre ;

(ii) introduire du fluide non filtré dans le filtre (1) par une ou plusieurs entrées (13) et ensuite le faire traverser la préenduction et le milieu filtrant (6) afin de déposer un gâteau de filtration sur la préenduction et produire ainsi un fluide filtré qui quitte le filtre (1) par une sortie (15), et

(iii) ouvrir une vidange (5) du filtre (1) ;

introduire du fluide dans le filtre (1) et le faire passer à travers le milieu filtrant (6) en sens inverse de celui de la circulation du fluide pendant l'étape (i), afin de dégager le gâteau de filtration et la préenduction du milieu filtrant ; utiliser un fluide pour immerger le gâteau de filtration et la préenduction et les évacuer du filtre (1) par la vidange (5) ; et fermer la vidange (5), en achevant le cycle et en préparant le filtre pour recommencer les cycles de filtration ;

caractérisé en ce qu'à au moins une occasion, le cycle de filtration comprend des étapes consistant à :

    a) interrompre l'étape (ii) ;

    b) fermer la ou les entrées (13) et introduire du fluide par la sortie (15) et à travers le milieu filtrant (6) en sens inverse de celui de la circulation du fluide pendant l'étape (i), afin de soulever et désagréger le gâteau de filtration et la préenduction ;

    c) faire passer du fluide à travers le milieu filtrant (6) dans la sens de la circulation du fluide pendant l'étape (i) pour produire sur le milieu filtrant (6) une préenduction comprenant la masse du gâteau de filtration désagrégé et la préenduction de l'étape (b) ; et

    d) continuer l'étape (ii).

**2.** Procédé selon la revendication 1, dans lequel l'étape (b) a une durée inférieure ou égale à 10 secondes.

**3.** Procédé selon la revendication 1 ou 2, dans lequel l'étape (b) comprend l'ouverture et la fermeture de la vidange (5), la durée d'ouverture de la vidange (5) étant inférieure à la durée de l'étape (b).

**4.** Procédé selon la revendication 3 dépendante de la revendication 2, dans lequel la durée de l'ouverture de la vidange (5) à l'étape (b) est inférieure ou égale à 2 secondes.

**5.** Procédé selon l'une quelconque des revendications 1 à 4, dans lequel le cycle de filtration comprend de multiples séquences des étapes (a) à (d).

**6.** Moyens de commande d'un filtre comprenant :
    a) des moyens de comptage de temps comportant une sortie connectée à un régulateur, le régulateur comportant une sortie connectée à une pompe (16) du filtre ; un clapet (10) d'entrée du filtre qui est commandé électriquement ; un clapet (11) de sortie du filtre qui est commandé électriquement ; et un clapet (12) de vidange du filtre qui est commandé électriquement ; les moyens de comptage de temps étant destinés à commander le régulateur pour amener celui-ci à exécuter un cycle de filtration comprenant les étapes consistant à :

    (i) ouvrir les clapets d'entrée et de sortie (10, 11) pendant que le clapet de vidange (12) est maintenu fermé afin de permettre la circulation de fluide dans le sens positif à travers un milieu filtrant (6) situé dans le filtre (1); et

    (ii) ouvrir le clapet de vidange (12) pour permettre une circulation inverse de fluide à travers le milieu filtrant (6) ;

caractérisé en ce qu'à moins une occasion, le cycle de filtration comprend des étapes consistant à :

    a) interrompre l'étape (i) ;

    b) fermer le clapet d'entrée (10) pendant une première période de temps prédéterminée ; et ouvrir le clapet de vidange (12) pendant une seconde période prédéterminée de temps comprise dans et plus courte que la première période de temps prédéterminée, afin de permettre une circulation inverse de fluide à travers le milieu filtrant (6) ; et

    c) continuer l'étape (i).

**7.** Moyens de commande selon la revendication 6, dans lesquels l'étape (b) a une durée inférieure ou égale à 10 secondes.

**8.** Moyens de commande selon la revendication 6 ou 7, dans lesquels la seconde période prédéterminée est inférieure ou égale à 2 secondes.

**9.** Moyens de commande selon l'une quelconque des revendications 6 à 8, dans lesquels le cycle de filtration comprend de multiples séquences des étapes (a) à (c).

**10.** Moyens de commande selon l'une quelconque des revendications 6 à 9, comprenant par ailleurs un clapet de liaison (9) commandé électriquement et destiné à une canalisation raccordant le côté amont, dans le sens positif de la circulation, du clapet d'entrée (10) à un point situé entre le côté aval, dans le sens positif de la circulation, d'une sortie (15) du filtre et le clapet de sortie (11) ; le clapet de liaison (9) étant maintenu fermé pendant l'étape (i) et, pendant l'étape (b), le clapet de sortie (11) étant fermé et le clapet de liaison (9) étant ouvert.

**11.** Moyens de commande selon l'une quelconque des revendications 6 à 10, dans lesquels les moyens de comptage de temps consistent en deux compteurs de temps, un premier compteur de temps destiné à régler le cycle de filtration et un second compteur de temps, actionné par le premier compteur de temps, destiné à régler les étapes (a) à (c).

**12.** Moyens de commande selon la revendication 11, dans lesquels chaque compteur de temps comprend un commutateur standard destiné à mettre en circuit le régulateur par des moyens soit mécaniques, soit électriques.

**13.** Moyens de commande selon l'une quelconque des revendications 6 à 12, dans lesquels le régulateur est un régulateur analogique ou numérique.

**14.** Moyens de commande selon la revendication 13, dans lesquels le régulateur est destiné à mettre en marche la pompe (16) du filtre et à actionner les clapets (9 à 12) au moyen de signaux électriques.

**15.** Moyens de commande selon l'une quelconque des revendication 6 à 14, dans lesquels le régulateur comprend une commande manuelle prépondérante qui comporte des moyens pour provoquer à la main l'exécution de l'une quelconque de l'étape (i), de l'étape (ii) et des étapes (a) à (c).

**Patentansprüche**

**1.** Batchfiltrationsverfahren mit einem Filtrationszyklus, der die folgenden Schritte beinhaltet:

(i) Einführen einer Filtrationshilfe in einen Filter (1), und Veranlassen, daß eine ungefilterte Flüssigkeit durch den Filter (1) fließt, um eine Vorbeschichtung der Filtrationshilfe auf einem Filtermedium (6) im Filter bereitzustellen,

(ii) Einlassen ungefilterter Flüssigkeit in den Filter (1) durch einen oder mehrere Einlässe (13) und dann durch die Vorbeschichtung und das Filtermdium (6), um einen Filterkuchen auf der Vorbeschichtung abzulagern und dadurch gefilterte Flüssigkeit zu produzieren, die den Filter (1) durch einen Auslaß (15) verläßt; und

(iii) Öffnen eines Ausflusses (5) aus dem Filter (1); Einlassen von Flüssigkeit in den Filter (1) und durch das Filtermedium (6) in umgekehrter Richtung zum Flüssigkeitsfluß während Schritt (i), um den Filterkuchen und die Vorbeschichtung vom Filtermedium abzuheben; Anwenden von Flüssigkeit zum Ausspülen des Filterkuchens und der Vorbeschichtung aus dem Filter (1) durch den Ausfluß (5); und Schließen des Auslflusses (5), um so den Zyklus zu beenden und den Filter auf Wiederholungen des Filtrationszyklus vorzubereiten;

**dadurch gekennzeichnet,** daß der Filtrationszyklus zumindest zu einem Zeitpunkt folgende Schritte beinhaltet:

(a) Unterbrechen des Schrittes (ii);

(b) Schließen der Einlässe (13) und Durchlassen von Flüssigkeit durch den Auslaß (15) und durch das Filtermedium (6) in umgekehrter Richtung zum Flüssigkeitsfluß während Schritt (i), Abheben und Aufbrechen des Filterkuchens und der Vorbeschichtung;

(c) Durchlassen von Flüssigkeit durch das Filtermedium (6) in Richtung des Flüssigkeitsflusses in Schritt (i), um auf dem Filtermedium (6) eine Vorbeschichtung bereitzustellen, welche die Masse des aufgebrochenen Filterkuchens und der Vorbeschichtung von Schritt (b) enthält; und

(d) Wiederaufnahme von Schritt (ii).

**2.** Verfahren nach Anspruch 1, wobei Schritt (b) eine Dauer von 10 Sekunden oder weniger hat.

**3.** Verfahren nach Anspruch 1 oder 2, wobei Schritt (b) Öffnen und Schließen des Ausflusses (5) beinhaltet, wobei die Öffnungsdauer des Ausflusses (5) geringer ist als die Dauer von Schritt (b).

**4.** Verfahren nach Anspruch 3, falls dieser von Anspruch 2 abhängig ist, wobei die Öffnungsdauer des Ausflusses (5) während Schritt (b) 2 Sekunden oder weniger beträgt.

**5.** Verfahren nach einem der Ansprüche 1 bis 4, wobei der Filtrationszyklus eine Mehrzahl von Abfolgen der Schritte (a) bis (d) beinhaltet.

**6.** Steuervorrichtung für einen Filter mit: einer Zeitmeßeinrichtung mit einer Ausgabe an einen Regler mit einer Ausgabe an eine Filterpumpe (16); einem elektrisch betriebenen Filtereinlaßventil (10); einem elektrisch betriebenen Filterauslaßventil (11); und einem elektrisch betriebenen Filterausflußventil (12); wobei die Zeitmeßeinrichtung so ausgelegt ist, daß der Regler aktiviert wird, einen Filtrationszyklus auszuführen, der die folgenden Schritte umfaßt:

(i) Öffnen der Einlaß- und Auslaßventile (10, 11), während das Ausflußventil (12) geschlossen gehalten wird, um ein Vorwärtsfließen der Flüssigkeit durch ein Filtermedium (6) in dem Filter (1) zu ermöglichen; und

(ii) Öffnen des Ausflußventils (12), um ein umgekehrtes Fließen der Flüssigkeit durch das Filtermedium (6) zu ermöglichen; **dadurch gekennzeichnet,** daß der Filtrationszyklus zumindest zu einem Zeitpunkt folgende Schritte beinhaltet:

(a) Unterbrechen des Schrittes (i);

(b) Schließen des Einlaßventils (10) für eine erste vorbestimmte Zeitspanne; Öffnen des Ausflußventils (12) für eine zweite vorbestimmte Zeitspanne, die innerhalb der erstgen vorbestimmten Zeitspanne und kürzer als diese ist, um ein umgekehrtes Fließen der Flüssigkeit durch das Filtermedium (6) zu ermöglichen; und

(c) Wiederaufnahme von Schritt (i).

7. Steuervorrichtung nach Anspruch 6, wobei Schritt (b) eine Dauer von 10 Sekunden oder weniger hat.

8. Steuervorrichtung nach Anspruch 6 oder 7, wobei die zweite vorbestimmte Zeitspanne eine Dauer von 2 Sekunden oder weniger hat.

9. Steuervorrichtung nach einem der Ansprüche 6 bis 8, wobei der Filtrationszyklus eine Mehrzahl von Abfolgen der Schritte (a) bis (c) umfaßt.

10. Steuervorrichtung nach einem der Ansprüche 6 bis 9, weiterhin mit einem elektrisch betriebenen Verbindungsventil (9) für ein Rohr, welches die beim Vorwärtsfließen stromaufwärts liegende Seite des Einlaßventils (10) mit einem Punkt verbindet, der zwischen einem beim um-gekehrten Fließen stromabwärts liegenden Fil-terauslaß (15) und dem Auslaßventil (11) liegt; wobei während Schritt (i) das Verbindungsventil (9) geschlossen gehalten wird und während Schritt (b) das Auslaßventil (11) geschlossen und das Verbindungsventil (9) geöffnet wird.

11. Steuervorrichtung nach einem der Ansprüche 6 bis 10, wobei die Zeitmeßeinrichtung aus zwei Zeitmeßgeräten besteht und wobei ein erstes Zeitmeßgerät so eingestellt ist, daß der Filtrationszyklus zeitlich bemessen wird und ein zweites Zeitmeßgerät, durch das erste aktiviert, so eingestellt ist, daß die Schritte (a) bis (c) zeitlich bemessen werden.

12. Steuervorrichtung nach Anspruch 11, wobei je-des Zeitmeßgerät ein Standardzeitschalter auf-

weist, der so ausgelegt ist, daß der Regler entweder durch eine mechanische oder elektrische Vorrichtung aktiviert wird.

13. Steuervorrichtung nach einem der Ansprüche 6 bis 12, wobei der Regler ein Analog- oder Digitalregler ist.

14. Steuervorrichtung nach Anspruch 13, wobei der Regler so programmiert ist, daß die Filterpumpe (16) und die Ventile (9 bis 12) durch elektrische Signale aktiviert werden.

15. Steuervorrichtung nach einem der Ansprüche 6 bis 14, wobei der Regler eine manuelle Übersteuerung aufweist, die eine Einrichtung enthält, die irgendeinen der Schritte (i), (ii) und (a) bis (c) auslösen kann.

FIG.1

FIG.2

FIG.3